# EUROPEAN PATENT SPECIFICATION

(11) **EP 1 046 423 B1**
(45) Date of publication and mention of the grant of the patent: **25.07.2007**
(21) Application number: 99119600.7
(22) Date of filing: 02.10.1999
(51) Int. Cl.: B01J 23/63, B01J 35/00, B01D 53/94, B01J 37/02

(54) **Layered noble metal-containing exhaust gas catalyst and its preparation**
Mehrschichtiger Edelmetall-enthaltender Autoabgaskatalysator und seine Herstellung
Catalyseur multi-couches de post-combustion automobile à base de métaux précieux et sa préparation

(30) Priority: 23.04.1999 EP 99108061
(43) Date of publication of application: 25.10.2000
(73) Proprietor: Umicore AG & Co. KG, 63457 Hanau-Wolfgang (DE)
(72) Inventor: Mussmann, Lothar, Dr., 63067 Offenbach (DE); Lindner, Dieter, Dr., 63457 Hanau (DE); Harris, Michael, 64839 Münster (DE); Kreuzer, Thomas, Dr., 61184 Karben (DE); Lox, Egbert, Dr., 63403 Hanau (DE)
(74) Representative: Stellbrink, Axel

(56) References cited:
- WO-A-98/45026
- DE-A- 19 714 732
- DE-A- 19 726 322
- DE-A- 19 742 705
- US-A- 4 134 860
- US-A- 5 496 788

## Description

The present invention relates to a high performance three-way catalyst (TWC) containing an inner and an outer layer on an inert carrier body. The layers comprise noble metals from the platinum group deposited on support materials, as defined in claim 1.

Three-way catalysts are primarily used to convert the pollutants carbon monoxide (CO), hydrocarbons (HC) and nitrogen oxides (NOₓ) contained in the exhaust gas of internal combustion engines into harmless substances. Known three-way catalysts with good activity and durability utilise one or more catalytic components from the platinum group metals such as platinum, palladium, rhodium and iridium deposited on a high surface area, refractory oxide support, e.g., a high surface area alumina. The support is usually carried in the form of a thin layer or coating on a suitable carrier or substrate such as a monolithic carrier comprising a refractory ceramic or metal honeycomb structure.

The ever increasing demand for improved catalyst activity and life has led to complex catalyst designs comprising multiple catalyst layers on the carrier structures, each of the layers containing selected support materials and catalytic components as well as so called promoters, stabilisers and oxygen storage compounds

US Patent No. 5,063,192 describes a three-way catalyst with improved resistance to thermal stresses which consists of a first and a second catalyst layer. The first layer is directly coated onto the surface of a monolithic honeycomb carrier and comprises active alumina and deposited thereon catalytic components comprising platinum and/or rhodium and at least one compound from zirconia, lanthana or barium oxide. The second layer is coated on top of the first layer and comprises active alumina, ceria and a catalytic component which comprises palladium. The oxides of zirconium, lanthanum and/or barium prevent the particles of active alumina from sintering due to high exhaust gas temperatures and thereby improve thermal resistance of the three-way catalyst.

US Patent No. 5,677,258 describes a three-way catalyst containing barium oxide with improved resistance against poisoning with sulfur and water. The catalyst consists of two layers on a honeycomb carrier. The lower catalyst layer is located directly on the carrier and comprises at least barium or lanthanum. The upper layer comprises a water adsorbing component. The catalyst further comprises a catalytically active metal which is located at least in the lower or upper layer. In a special embodiment the lower layer further comprises palladium and active alumina and the upper layer further comprises platinum and rhodium.

US Patent No. 5,057,483 discloses a three-way catalyst comprising two discrete layers on a monolithic carrier. The first, lower layer comprises a first activated alumina support, a catalytically effective amount of a first platinum catalytic component dispersed on the first alumina support, and a catalytically effective amount of bulk ceria. The second or outer layer comprises a co-formed rare earth oxide-zirconia support, a catalytically effective amount of a first rhodium catalytic component dispersed on the co-formed rare earth oxide-zirconia support, a second activated alumina support, and a catalytically effective amount of a second platinum catalytic component dispersed on the second alumina support.

PCT-Publication WO 95/35152 discloses another three-way catalyst, consisting of two layers, which is thermally stable up to 900°C or more. The first layer comprises a first support; at least one first palladium component, optionally a first platinum group component; optionally at least one first stabiliser; optionally at least one first rare earth metal component and optionally a zirconium compound. The second layer comprises a second support; a second platinum component; a rhodium component; a second oxygen storage composition comprising a diluted second oxygen storage component; and optionally a zirconium component.

German publication DE 197 42 705 A describes a layered catalyst wherein the base layer contains platinum and an alkali metal or alkaline earth metal. The platinum may be supported on at least one of alumina, ceria and zeolite. The top layer contains zeolite as well as platinum and rhodium.

WO 98/45026 discloses a layered catalyst composite comprising a first layer and a second layer:
the first layer comprising:
   at least one first layer lanthana stabilized alumina support comprising a solid solution comprising lanthana and alumina;
   at least one first layer unstabilized refractory oxide support, wherein the refractory oxide is not in solid solution with a rare earth component;
   at least one first layer precious metal component located on the area stabilized alumina support and the unstabilized refractory oxide support;
   a first layer oxygen storage composition;
   at least one first layer stabilizer; and
   a first layer zirconium compound; and
the second layer comprising:
   at least one second layer support;
   a second layer oxygen storage composition is a composite which comprises,
      40 to 80 weight percent of a diluent component,
      10 to 60 weight percent of a cerium component,
      1 to 15 weight percent of a neodymium component, and
      1 to 15 weight percent of a praseodymium component;
a second layer precious metal component; and
a second layer zirconium component.

German publication DE 197 26 322 A1 describes a three-way catalyst which exhibits improved activity and thermal stability and which consists of two layers on an inert carrier. The first or lower layer comprises several particulate materials and one or more highly dispersed alkaline earth metal oxides and at least one platinum group metal which exhibits an intimate contact with all components of the first layer. The particulate materials of the first layer comprise at least one particulate oxygen storage material and at least one further particulate component. The second layer comprises again several particulate materials and at least one platinum group metal. The particulate materials of the second layer comprise at least a particulate oxygen storage material and a further particulate component. The platinum group metals of the second layer are deposited selectively on the particulate materials of the second layer. Preferably the platinum group metal in the first layer is palladium and the platinum group metals of the second layer are platinum and rhodium.

This latter three-way catalyst exhibits excellent catalytic activity especially during the cold start phase of modern internal combustion engines which are operated with lean air/fuel mixtures during cold start to increase the exhaust gas temperature as fast as possible. The excellent behaviour of the catalyst is essentially due to the use of palladium which under lean exhaust gas conditions yields lower light off temperatures than platinum. Despite its excellent performance this catalyst faces the problem that there has developed a shortage in palladium supply during the last years resulting in rising prices and an uncertain supply situation.

A further problem with existing three-way catalysts is the fact that they suffer under fuel-cut aging. The term fuel-cut aging describes catalyst performance degradation due to fuel-cut after high load operation of the internal combustion engine. Such a situation occurs frequently during fast driving phases when abrupt deceleration is required. During fast driving phases the engine is operated at air/fuel ratios slightly below the stoichiometric value. The exhaust gases may reach temperatures well above 800°C resulting in even higher catalyst temperatures due to the exothermic conversion reactions at the catalyst. In case of abrupt deceleration modern motor electronics completely stop fuel supply to the engine with the result that the normalised air/fuel ratio (also called lambda value λ) of the exhaust gas jumps from rich to lean values.

These large excursions of the normalised air/fuel ratio from rich to lean values at high catalyst temperatures degrade catalytic activity. Catalytic activity can at least partly be recovered by prolonged operation under stoichiometric exhaust gas conditions. The faster catalytic activity is regained after fuel-cut aging the better is the overall catalyst performance. Speeding up recovery of catalytic activity after fuel-cut aging is therefore mandatory for modern three-way catalysts.

An object of the present invention is to develop a three-way catalyst based on platinum and rhodium which exhibits a similar catalytic performance as known palladium/rhodium catalysts and which is commercially competitive to the latter. Further, after high temperature aging under lean exhaust gas conditions, the catalyst should recover its full three-way efficiency quickly. The catalyst should also exhibit an improved nitrogen oxide conversion to reduce the ozone forming potential of the cleaned exhaust gas.

These and other objects are achieved with a catalyst containing an inner and an outer layer on an inert carrier body comprising noble metals from the platinum group deposited on support materials. The catalyst is characterised in that
the inner layer comprises platinum deposited on a first support and on a first oxygen storage component and the outer layer comprises platinum and rhodium deposited on a second support and the outer layer further comprises a second oxygen storage component, wherein said first and second supports are the same or different and are compounds selected from the group consisting of silica, alumina, titania, zirconia, mixed oxides or mixtures therefrom and zirconia-rich zirconia/ceria mixed oxide.

The catalyst of the present invention consists of a catalytic coating comprising an inner and an outer layer on an inert catalyst carrier and therefore forms a so called double layer catalyst. The "inner layer" is meant to be the first layer of the catalytic coating deposited directly on the catalyst carrier. The inner layer is covered with the "outer layer" or second layer. The exhaust gas to be treated with the catalyst directly comes into contact with the outer layer.

The term "support material" or "support" is used in the present invention to designate a particulate material onto which catalytically active components such as the noble metals from the platinum group of elements or other promoter components can be deposited in highly dispersed form, i.e. with crystallite sizes between 1 and 10 nm. For that purpose the support materials should have a specific surface area (also called BET surface, measured according to DIN 66132) of more than 5 m²/g. The first and second oxygen storage components of the catalyst are also used in particulate form.

Without wanting to restrict the present invention to a particular theory, it is assumed that the contribution of the lower layer to the overall catalytic performance of the catalyst consists mainly in the oxidation of hydrocarbons and carbon monoxide while the main task of the outer layer is the reduction of nitrogen oxides. But the outer layer also contributes, particularly in the cold start phase, towards conversion of hydrocarbons and carbon monoxide.

The superior properties of the catalyst according to the invention with regard to fuel cut aging and nitrogen oxides conversion is mainly attributed to the fact that in the outer layer platinum and rhodium are deposited on the second support material only.

It was observed that depositing platinum and rhodium onto the same support material shortens the recovery time of catalytic activity after exposure to lean exhaust gas conditions at high temperatures. This in turn yields higher conversion efficiencies for nitrogen oxides over a full driving cycle. Depositing platinum and rhodium onto the same support material means in the context of the present invention that platinum and rhodium are dispersed on the same particles of the second support material, that is, platinum and rhodium are at least closely neighboured on the same particles. Further improvements can be obtained by ensuring an intimate contact between both noble metals. How this can be accomplished will be discussed further below.

According to the present understanding of the invention the reasons for fuel cut aging of three-way catalysts may be that large excursions of the normalised air/fuel ratio from rich to lean values at high catalyst temperatures degrades the catalytic activity especially of rhodium. Under stoichiometric or rich exhaust gas conditions rhodium is reduced nearly to the oxidation state zero which is the most effective state for three-way catalysis. Under lean exhaust gases and at high catalyst temperatures, rhodium gets oxidised up to oxidation level +3. This oxidation state of rhodium is less active for three-way conversion of pollutants. Moreover, since Rh₂O₃ is isomorphic in crystallographic structure to Al₂O₃ it can migrate at temperatures above 600°C into the lattice of alumina or other isomorphic support oxides of the general composition M₂O₃ (M stands for a metal atom), resulting in a permanent degradation of catalytic activity.

To regain its catalytic activity and to avoid losses of rhodium into the lattice of alumina, rhodium must therefore be reduced as quickly as possible when the exhaust gas composition changes back to stoichiometry. According to the present understanding of the invention, reduction of rhodium to oxidation state zero is catalysed by platinum. The more intimate the contact between platinum and rhodium is, the better is this reduction effect.

In addition, the tendency of Rh₂O₃ to migrate into isomorphic support oxides can be limited by appropriate doping of these oxides. Beneficial are doping components which are capable of generating activated hydrogen under reducing conditions. The activated hydrogen helps to convert rhodium oxide more rapidly into the metallic form under reducing conditions, and hence the risk of Rh₂O₃ migrating into the support oxide is further minimised. A suitable doping component for that purpose is cerium oxide (ceria). But since ceria also exhibits an oxygen storage and release capability the amount of doping with ceria must be kept low so as to not promote oxidation of rhodium by a too high level of ceria in the support oxide.

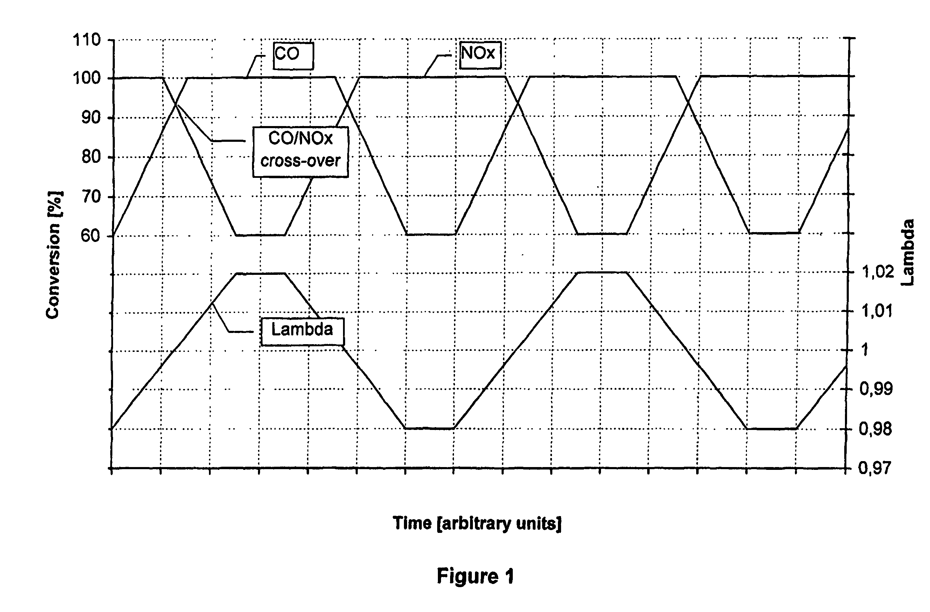

The present invention will be further understood with reference to the accompanying drawings, wherein Figure 1 shows a schematic representation of the measuring principle for determining CO/NOₓ cross-over points.

Specific embodiments of the catalyst according to the invention will now be explained in more detail.

The first and second supports of the catalyst may be the same or different. The first and second supports are selected from the group consisting of silica, alumina, titania, zirconia, mixed oxides or mixtures therefrom and zirconia-rich zirconia/ceria mixed oxide. The term "mixed oxide" designates an intimate mixture of two or more oxides on an atomic level which may be regarded as a new chemical compound, while the term mixture designates the mechanical mixture of two or more particulate oxide materials.

Most advantageously, the supports are selected from activated aluminas, optionally complemented by zirconia or a zirconia-rich zirconia mixed oxide. Activated aluminas exhibit specific surface areas of up to 400 m²/g. They comprise the various phases from the transition aluminas which are formed by heating aluminium hydroxides in air (see Ullmann's Encyclopaedia of Industrial Chemistry; Fifth Edition, 1985, Volume A1, pages 561 and 562). For improved temperature stability, the active aluminas can be stabilised with 0,5 to 20 wt.-% of lanthana. Such materials are commercially available. The frequently used stabilisation of alumina with barium oxide (baria) is less preferred if alumina is used as support material for platinum because this bears the risk of formation of barium platinate.

The term "zirconia-rich" means that the material contains at least more than 50% by weight of zirconia, preferably more than 60 and most preferable more than 80% by weight, the balance being formed by yttria, neodymia, calcium oxide (calcia), silica, lanthana or ceria which serve to stabilise zirconia against thermal stresses. Most preferably a zirconia-rich zirconia/ceria mixed oxide is used. Pure zirconia and the stabilised zirconia compounds will be summarised under the term "zirconia component" in the following.

The inner or first layer of the catalyst contains, in addition to stabilised alumina and the optional zirconia component, an oxygen storage material for improved three-way conversion of the pollutants. Ceria is well-known to exhibit an oxygen storage capability. Under lean exhaust gas conditions, cerium is completely oxidised to the oxidation state Ce⁴⁺. Under rich exhaust gas conditions ceria releases oxygen and acquires the Ce³⁺ oxidation state. Instead of using pure ceria as an oxygen storage compound it is preferred to use ceria-rich ceria/zirconia mixed oxide compounds with a ceria concentration of from 60 to 90 wt.-% relative to the total weight of the mixed oxide. Such materials are available with specific surface areas of 20 to 200 m²/g and exhibit a good temperature stability of the surface area. Further improvements can be obtained by stabilising this material with praseodymia, yttria, neodymia, lanthana or mixtures thereof. For stabilisation concentrations of the stabilising compounds of from 0,5 to 10 wt.-%, relative to the total weight of the stabilised material, are sufficient. Stabilising of oxygen storage materials based on ceria using praseodymia, neodymia, lanthana or mixtures thereof is described in German patent application DE 197 14 707 A1.

According to the present invention both, the support materials and the oxygen storage compound serve as supports for platinum in the first layer. Depositing platinum on only one of these materials has proved to yield inferior catalytic activities.

The oxygen storage material of the outer layer may be the same as, or different from, the storage material of the inner layer. It is preferred to use the same storage material for the inner and outer layer, especially ceria/zirconia mixed oxides stabilised with praseodymia. The second oxygen storage material of the outer layer must be kept free from rhodium. Depositing rhodium on the second oxygen storage material would lead to deactivation of rhodium's reducing activity by oxidation of rhodium.

The outer or second layer may further comprise a certain quantity of active alumina in particulate form which serves as a diluting material. This material may or may not be stabilised with lanthana or baria.

Further improvements of catalytic activity and temperature stability can be obtained if the second layer is complemented with a highly dispersed component selected from the group consisting of yttria, neodymia, lanthana or praseodymia, with praseodymia being preferred. These compounds may be introduced into the layer by adding a soluble precursor compound of these compounds to the coating composition of the second layer.

The term "dispersed component" means that, contrary to a "particulate component", this material is added to the coating composition in the form of a soluble precursor compound which acquires its final dispersed form upon calcining of the catalytic coating. The average particle size of dispersed components may range between 0,001 and 0,1 µm while particulate components usually exhibit mean particle diameters between 1 and 15 µm.

The dispersed component of the second layer serves multiple functions. At first, it stabilises the particulate components (alumina support and ceria/zirconia oxygen storage component) of the second layer against thermal degradation. Therefore, when adding, e.g., praseodymia in dispersed form to the second layer, ceria/zirconia must not be stabilised beforehand but will be stabilised in situ during the manufacture of the coating. Secondly, praseodymia exhibits also an oxygen storage and release function which helps to improve the dynamic behaviour of the final catalyst, though the oxygen storage capability of praseodymia is not so pronounced as that of ceria.

The catalyst carrier body used in the present invention is in the form of a honeycomb monolith with a plurality of substantially parallel passage ways extending therethrough. The passage ways are defined by walls onto which the catalytic coating comprising the inner and the outer layer is applied.

The passage ways of the carrier body serve as flow conduits for the exhaust gas of the internal combustion engine. When flowing through these passages, the exhaust gas comes into close contact with the catalytic coating, whereby the pollutants contained in the exhaust gas are converted into benign products. The carrier bodies may be manufactured from any suitable material, such as from metallic or ceramic materials, as is well known in the art. The passage ways are arranged in a regular pattern over the cross section of the carrier bodies. The so-called cell density (passage ways per cross sectional area) may vary between 10 and 200 cm⁻². Other suitable carrier bodies may have an open cell foam structure. Metallic or ceramic foams may be used.

The inner layer of the catalytic coating is applied to the carrier body in amounts of from about 50 to 250 g/l, and the outer layer is applied in amounts of from 10 to 150 g/l of the carrier body. Advantageously, the inner layer comprises of from 20 to 150 g/l of said first support component and from 10 to 100 g/l of said first oxygen storage component. The inner layer may further comprise 5 to 60 g/l of zirconia or of a zirconia component. Platinum is present in the first layer in concentrations of from 0,01 to 5, preferably from 0,05 to 1 wt.-%, relative to the total weight of the first layer. The concentration of platinum relative to the volume of the catalyst carrier ranges from 0,01 to 12,5 g/l, with concentrations between 0,025 and 2 g/l being most suitable.

In a most preferred embodiment, the first support comprises an active alumina with a specific surface area between 50 and 200 m²/g stabilised with lanthana, while the first oxygen storage component is advantageously selected from ceria-rich ceria/zirconia mixed oxides containing 60 to 90 wt.-% of ceria and additionally stabilised with 0,5 to 10 wt.-% of praseodymia (Pr₆O₁₁). This composition of the first layer is believed to improve its catalytic function with respect to the oxidation of hydrocarbons (HC) and carbon monoxide (CO).

The outer layer of the catalytic coating comprises of from 5 to 100, preferably of from 5 to 20 g/l of said second support, and from 5 to 100, preferably from 5 to 50 g/l of said second oxygen storage component. The outer layer may further comprise from 5 to 60 g/l of activated alumina. In the outer layer, platinum and rhodium are deposited on the second support. Compared to the inner layer, the concentration of the noble metals relative to the weight of the supporting material is preferably higher in the outer layer. Thus, concentrations of platinum plus rhodium between 0,5 and 20 wt.-% relative to the weight of the second support material may be selected with concentrations between 1 and 15 wt.-% being preferred. These concentrations correspond to concentrations relative to the volume of the catalyst carrier between 0,025 and 20 g/l, preferably between 0,05 and 15 g/l.

As already explained, platinum in close contact to rhodium in the outer layer helps to reduce rhodium oxide formed during fuel-cut-off phases back to the metallic state. For performing this task, the mass ratio between platinum and rhodium should be selected between 5:1 and 1:3. Mass ratios between 3:1 and 1:1 are most effective.

As in the case of the inner layer, the second support is preferably selected from an active alumina with a specific surface area between 50 and 200 m²/g stabilised with lanthana, while the second oxygen storage component is selected from ceria-rich ceria/zirconia mixed oxides containing 60 to 90 wt.-% of ceria additionally stabilised with 0,5 to 10 wt.-% of praseodymia (Pr₆O₁₁). As discussed above, stabilisation with praseodymia, or alternatively with yttria, neodymia or lanthana, can also be achieved by adding these compounds as highly dispersed components to the second layer.

For the purpose of suppressing the emission of hydrogen sulfide the first and second layers of the catalytic coating may further comprise from about 1 to 40 g/l of a nickel, iron or manganese component.

The catalyst of the present invention may be manufactured in various ways. Some of them will be described below:

For providing the inner layer, the passage ways of the catalyst carrier can be coated with an aqueous coating composition comprising the particulate support materials of the inner layer (including the first oxygen storage material). The coating composition will also be called coating dispersion within the context of this invention. The techniques for coating catalyst carriers with such a coating composition are well known to the expert. The coating is then dried and calcined in air. Drying is preferably done at elevated temperatures of up to 150°C. For calcining the coating, temperatures of from 200 to 500°C for a period from 0,1 to 5 hours should be applied.

After calcination, platinum may be dispersed onto the coated carrier body by dipping the monolith into a solution containing a precursor compound of platinum. The solution may be an aqueous or non-aqueous (organic solvent) solution. Any platinum precursor compound may be used, provided the compound is soluble in the chosen solvent and decomposes upon heating in air at elevated temperatures. Illustrative of these platinum compounds are chloroplatinic acid, ammonium chloroplatinate, platinum tetrachloride hydrate, platinum dichlorocarbonyl dichloride, dinitrodiamino platinum, platinum nitrate, platinum tetraammine nitrate and platinum tetraammine hydroxide. After impregnation, the coating is again calcined at temperatures between 200 and 500°C in air.

Alternatively, the inner layer may by prepared by first impregnating the particulate materials of the inner layer with an aqueous solution of a soluble precursor compound of platinum, drying and calcining the impregnated particulate materials to thermally fix platinum thereon. This catalysed material is then used to prepare the aqueous coating composition for coating the walls of the passage ways of the carrier body. The coating is then dried and calcined as described above.

In a preferred method for providing the inner layer there is prepared an aqueous dispersion from the particulate materials of the inner layer. For depositing and fixing platinum onto the particulate materials of the dispersion, a solution of platinum precursor compounds is injected slowly into the dispersion, and then the platinum compound is precipitated onto the particulate materials by properly adjusting the pH-value of the dispersion to yield the final coating composition. During injection and precipitation, the dispersion is continuously agitated to rapidly distribute the injected solution homogeneously over the whole volume of the dispersion. The precipitated compounds firmly adhere to the supporting materials.

The method of precipitation by injection is described in German patent applications DE 197 14 732 A1 and DE 197 14 707 A1. In the following it is also called injection precipitation.

Suitable platinum precursor compounds for this deposition method are those already described above. In addition, amine solubilised platinum compounds such as methylethanolamine platinum (IV) hexahydroxide ((MEA)₂Pt(OH)₆ = ((OH-C₂H₄-NH₂-CH₃) ₂⁺Pt^{IV}(OH)₆) and ethanolamine platinum (IV) hexahydroxide ((EA)₂Pt (OH) ₆ = (OH-C₂H₄-NH₃)₂⁺Pt^{IV}(OH)₆) or other organic derivatives of quaternary ammonium salts may be used. These anionic complex compounds of platinum are known to yield platinum metal deposits of high dispersion.

The amine solubilised precursor compounds give highly basic aqueous solutions. When using alumina as support material, the amine solubilised precursor compounds are readily fixed onto the surface of alumina by adsorption. By neutralising the dispersion, the adsorbed species can be fixed chemically.

The coating dispersion thus prepared is then used to coat the walls of the passage ways of the carrier body. Afterwards the coating is dried and calcined in air.

The above described method of injection precipitation is preferred because it involves only one drying and calcining step whereas the first two methods each require two drying and calcining steps.

Preferably, the first oxygen storage component for the lower layer is selected from a ceria-rich ceria/zirconia mixed oxide stabilised with praseodymia. An already stabilised material may be used or stabilisation may be effected in a separate manufacturing step. Ceria/zirconia may also be stabilised with praseodymia in situ during the preparation of the first layer. For that purpose, a solution of a praseodymia precursor compound may be prepared and ceria/zirconia is dispersed therein. Then ammonia is injected into the dispersion to precipitate the precursor compound onto ceria/zirconia. Suitable praseodymium precursor compounds are praseodymium acetate or nitrate.

The resulting dispersion is then used to prepare the final coating composition by further adding active alumina and optionally a particulate zirconia component. The particulate materials of this dispersion are then catalysed with platinum by the already discussed injection precipitation.

After having deposited the inner layer onto the catalyst carrier, the outer layer may be prepared as follows:

At first, the second support carrying platinum and rhodium is prepared by impregnating this support with an aqueous solution of soluble precursor compounds of platinum and rhodium, and drying and calcining the impregnated support. Thereafter the catalysed support, the second oxygen storage compound and additional active alumina are dispersed in water to obtain a coating composition. This coating composition is used to apply the outer layer on top of said inner layer. Finally, the coated carrier body is again dried and calcined as described herein.

Suitable precursor compounds for platinum are those already mentioned above. As precursor for rhodium, hexaamminerhodium chloride, rhodium trichloride, rhodium carbonylchloride, rhodium trichloride hydrate, rhodium nitrate and rhodium acetate may be used advantageously, but rhodium nitrate being preferred.

The second support may be impregnated with platinum and rhodium precursors sequentially in any order or simultaneously from one common solution. However, as pointed out above, it is highly desirable to obtain a contact between platinum and rhodium as intimate as possible. It was found that this is best achieved by first depositing platinum and subsequently rhodium onto the support material by the above described injection precipitation. For that purpose, the precursor compound for platinum is selected from amine solubilised platinum like ethanolamine platinum (IV) hexahydroxide, and precipitation of platinum is effected by properly adjusting the pH-value of the dispersion. After the precipitation of platinum, the support is not dried and calcined but rhodium is then directly precipitated from a solution of an acidic precursor compound of rhodium such as rhodium nitrate.

For that reason, the aqueous coating dispersion for the outer layer is prepared by preparing a first aqueous dispersion from the second support material, preferably active alumina, and then injecting an aqueous solution of an amine solubilised precursor compound of platinum into the dispersion. The amine solubilised precursor compound of platinum is readily adsorbed onto the active alumina. Thereafter, an aqueous solution of an acidic precursor compound of rhodium is injected into this dispersion and the pH-value of the dispersion is properly adjusted to fix the platinum and rhodium compounds onto the second support.

Thereafter, the catalysed second support material may be separated from the liquid phase of the first dispersion and dried and calcined before redispersing it together with the second oxygen storage component, and optionally additional active alumina, to form the coating dispersion for the outer layer. Most suitably, spray or flash calcination may be employed for calcining the catalysed support material. In case of spray or flash calcination, the wet material is injected into a hot stream of a gas with a temperature between 700 and 1000°C, giving rise to drying and decomposition of the precursor compounds within a few seconds or even within less than a second. This results in a high dispersion of the forming noble metal crystallites.

However, it is preferred to avoid the intermediate step of drying and calcining the catalysed second support material and to directly add the second oxygen storage component, and optionally additional active alumina, to the first dispersion containing the catalysed second support. This is possible because platinum and rhodium are fixed firmly to the second support material by the described injection precipitation.

The coating dispersion thus obtained is then used to apply the outer layer on top of the inner layer followed by drying and calcining the coated catalyst carrier. The latter preparation method for the outer layer is preferred over the formerly described method because it avoids the separate heat treatment of the catalysed second support.

The second oxygen storage component is preferably selected from a ceria/zirconia mixed oxide stabilised with praseodymia. Stabilisation of ceria/zirconia can advantageously be achieved by the in situ method already described above. For that purpose, the solution of the praseodymium precursor compound, ceria/zirconia and optionally alumina are added to the dispersion containing alumina catalysed with platinum and rhodium. The resulting dispersion is then used to apply the second coating layer. Upon calcination of this layer, the praseodymium precursor forms highly dispersed praseodymia on the surface of the particulate materials of the second layer. Thereby ceria/zirconia gets stabilised against thermal stresses, and in addition, the oxygen storage capacity of the catalyst is enhanced by the oxygen storage capacity of praseodymia.

In summary, in a most preferred embodiment of the invention, the inner layer of the catalyst comprises platinum deposited on active alumina and on ceria-rich ceria/zirconia mixed oxide, and the outer layer of the catalyst comprises platinum and rhodium deposited on active alumina and the outer layer further comprises ceria-rich ceria/zirconia mixed oxide. This catalyst is obtainable by the following process steps:
a) preparing a solution of a praseodymium precursor, adding ceria/zirconia mixed oxide and adjusting the pH-value of the dispersion to thereby precipitate the praseodymium precursor onto ceria/zirconia,
b) further adding alumina and optionally a zirconia component to the dispersion of step a),
c) injecting a solution of a platinum precursor into the dispersion of step b) and precipitating it onto alumina, ceria/zirconia and optionally the zirconia component to obtain a first coating composition for the inner layer of the catalyst,
d) coating a monolithic carrier with said first coating composition and drying and calcining the coating to thereby obtain a carrier coated with said inner layer,
e) preparing a dispersion of active alumina and injecting a solution of a platinum compound into this dispersion,
f) thereafter injecting an aqueous solution of a soluble rhodium precursor into the dispersion from step e) and adjusting the pH-value of the dispersion to thereby obtain a dispersion of active alumina catalysed with platinum and rhodium,
g) adding active alumina, ceria-rich ceria/zirconia mixed oxide and optionally a solution of a praseodymium precursor to the dispersion of step f) to obtain a second coating composition for the outer layer of the catalyst,
h) using said second coating composition to apply said outer layer on top of said inner layer and
i) drying and calcining the coated monolithic carrier.

Most preferably, the active alumina used in steps a) and d) for the inner and outer layers is stabilised with 0,5 to 20 wt.-% of lanthana. In the above described method, the support materials and ceria/zirconia are in situ stabilised with praseodymia. Alternatively, stabilisation of ceria/zirconia with praseodymia, yttria, neodymia, lanthana or mixtures thereof may be achieved in a separate step with the above doping compounds by impregnation, injection precipitation, co-precipitation, or co-thermohydrolysis.

For stabilising ceria/zirconia by impregnation, the particulate ceria/zirconia is wetted with an aqueous solution of precursor compounds of the desired doping element and then dried and calcined. Frequently, pore volume impregnation is employed for that purpose. In that case the precursor compounds are solved in an amount of water which corresponds to the water absorption capacity of the ceria/zirconia.

Injection precipitation has already been explained above for the deposition of the noble metal compounds onto the support materials.

For stabilising ceria/zirconia by co-precipitation, a common solution is prepared from ceria and zirconia precursor compounds and from a precursor compound of the stabilising element. Then the three compounds are simultaneously precipitated by adding a suitable precipitating agent. Thus, ceria/zirconia stabilised with praseodymium may be manufactured by preparing a common solution of cerium nitrate, zirconium nitrate and praseodymium nitrate, and adding ammonium carbonate or ammonium oxalate so that cerium, zirconium and praseodymium are precipitated simultaneously as carbonates or oxalates. After filtration and drying, the desired stabilised ceria/zirconia is obtained by calcination. Alternatively, co-precipitation can also be effected in a basic medium.

For stabilising ceria/zirconia by co-thermohydrolysis, a sol is prepared from cerium hydroxynitrate, zirconium hydroxynitrate and the hydroxynitrate of the doping element. Then the sol is dewatered by increasing the temperature. Thereby the hydroxynitrates are decomposed to form the corresponding oxides. Co-thermohydrolysis is described e.g. in WO 98/16472.

The beneficial properties of the catalyst according to the invention will now be explained further with the help of the following examples.

Figure 1 shows a schematic representation of the measuring principle for determining CO/NOx cross-over points.

### Comparison Example 1:

A conventional single layer platinum/rhodium catalyst CC1 (comparison catalyst 1) was prepared as follows:

Cerium and zirconium carbonate were treated with water and acetic acid overnight at room temperature to partly form the corresponding acetates. To the resulting dispersion stabilised alumina and bulk low surface area ceria were added. After wet milling, a monolithic carrier was coated with the slurry by a conventional dipping technique. The coated substrate was dried in air and calcined for 2 hours at 500°C in air.

The total washcoat uptake of the carrier was 205 g/l consisting of 112 g/l stabilised alumina, 34 g/l of bulk ceria, 34 g/l of ceria and 25 g/l zirconia, both latter compounds originating from acetate precursors.

The washcoat layer was impregnated with chloride free platinum and rhodium salts (platinum tetraammine nitrate and rhodium nitrate). The mass ratio between platinum and rhodium was 5Pt/lRh at a concentration of 1,41 g/l (40 g/ft³).

The final catalyst had the composition given in table 1:

**Table 1: Composition of comparison catalyst CC1**

| component | concentration |
|---|---|
| | [g/l] |
| alumina (stabilised with 3 wt.-% La₂O₃) | 112 |
| CeO₂ (bulk) | 34 |
| CeO₂ (ex acetate) | 34 |
| ZrO₂ (ex acetate) | 25 |
| total oxide content | **205** |
| platinum | 1,175 |
| rhodium | 0,235 |
| total noble metal content | **1,41** |

### Example 1:

A double layer catalyst C1 according to the invention was prepared as follows:

### Preparation of first (inner) layer:

To a solution of praseodymium acetate a cerium rich oxygen storage component (70 wt-% ceria, 30 wt-% zirconia) was added. By controlled injection of ammonia and stirring for about 30 minutes, praseodymium acetate was precipitated onto ceria/zirconia. Subsequently, stabilised alumina (3 wt-% La₂O₃, 97 wt-% Al₂O₃) and bulk zirconia were added. After this, a platinum solution ((EA)₂Pt(OH)₆) was injected into the slurry and platinum was precipitated onto alumina and ceria/zirconia by proper adjustment of the pH-value of the dispersion with acetic acid. After milling the slurry, a monolithic carrier was dipped into the slurry to apply the first layer.

The complete washcoat uptake was 160 g/l. Finally the first layer was dried and thereafter calcined in air at 500°C.

### Preparation of second (outer) layer:

Stabilised alumina (4 wt-% La₂O₃, 96 wt-% Al₂O₃) was dispersed in water. Thereafter, a chloride free platinum salt ((EA)₂Pt(OH)₆) was injected and was readily adsorbed onto the alumina. Thereafter, rhodium nitrate was injected. By adjusting the pH-value both catalytic components were fixed onto the supporting alumina.

To finish the washcoat alumina, praseodymium acetate and a ceria-rich oxygen storage component (70 wt-% ceria, 30 wt-% zirconia) were introduced.

Before coating a monolithic substrate, the slurry was adjusted to a pH of approximately 6 and milled. The total washcoat uptake of the second layer was 70 g/l. The catalyst was dried and calcined at 500°C in air.

The final catalyst had the composition given in tables 2 and 3:

**Table 2: Composition of inner layer of catalyst C1**

| component | concentration |
|---|---|
| | [g/l] |
| alumina (stabilised with 3 wt.-% La₂O₃) | 80 |
| CeO₂/ZrO₂ (70 wt.-% CeO₂; 30 wt.-% ZrO₂) | 51,7 |
| Pr₆O₁₁ | 4,3 |
| ZrO₂ | 24 |
| total oxide content | 160 |
| platinum | 0,94 |

**Table 3: Composition of outer layer of catalyst C1**

| component | concentration |
|---|---|
| | [g/l] |
| alumina (stabilised with 3 wt.-% La₂O₃) | 10 |
| CeO_{2/}ZrO₂ (70 wt.-% CeO₂; 30 wt.-% ZrO₂) | 18,5 |
| Pr₆O₁₁ | 1,5 |
| alumina (unstabilised) | 40 |
| total oxide content | 70 |
| platinum | 0,235 |
| rhodium | 0,235 |
| total noble metal content | 0,47 |

The mass ratio of platinum to rhodium was lPt/1Rh in the top layer. The total platinum and rhodium content was 1,41 g/l (1,175 g Pt/l and 0,235 g Rh/l) at a mass ratio of 5Pt/lRh (combined mass ratio for both layers).

### Comparison example 2:

A double layer catalyst CC2 was prepared in the same way as the catalyst from example 1. Contrary to example 1, platinum in the first layer was deposited in a separate preparation step onto alumina only before the coating slurry for the first layer was prepared.

### Comparison example 3:

A double layer catalyst CC3 was prepared in the same way as the catalyst from example 1. Contrary to example 1, the total amount of platinum was applied to the first layer only. Thus, in the resulting comparison catalyst platinum and rhodium were completely separated from each other.

### Evaluation of catalysts:

### a) Engine tests:

The catalysts according to the above examples and comparison examples were first aged at an internal combustion engine (engine displacement: 2,8 1) during 76 hours at an exhaust gas temperature in front of the catalysts of 850°C. Thereafter, the light off temperatures for the conversion of HC, CO and NOₓ and the CO/NOₓ cross-over points were determined. The term "light off temperature" designates the exhaust gas temperature at which 50% of the respective pollutant is converted by the catalyst. The light off temperature may be different for HC, CO and NOₓ.

Two separate aging runs were performed. In the first run, a sample of catalyst C1 and comparison catalyst CC1 were aged together, while in the second run another sample of catalyst C1 was aged together with comparison catalysts CC2 and CC3. Since aging runs cannot be reproduced exactly, the catalysts from the two aging runs differ slightly. Therefore, only the catalysts aged within the same aging run can be compared to one another.

The light off tests were performed at a space velocity of 65000 h⁻¹ with gradually increasing exhaust gas temperature (38 K/min) of the engine.

Measurement of CO/NOx cross-over points is schematically shown in Figure 1. The lambda-value of the air/fuel mixture supplied to the engine is periodically changed from 0,98 (rich air/fuel mixture) to 1,02 (lean air/fuel mixture) and vice versa. The residence times at λ=0,98 and λ=1,02 were set to 1 minute each. Changeover from rich to lean and back again was done within 3 minutes. The corresponding lambda-sweep is shown in Figure 1 (lower curve). The associated conversion curves for CO and NOₓ are also shown in Figure 1. During the lean period, CO-conversion is virtually 100%, and drops to approximately 50 to 60% during the rich period. The conversion curve for NOₓ behaves in a reciprocal manner. During the rich period, NOₓ-conversion approximates 100%, while during the lean period NOₓ-conversion drops down to values between 50 and 60%. At a lambda value of 1 both conversion curves cross each other. The corresponding conversion value is the highest conversion which can be achieved simultaneously for CO and NOₓ. The higher this cross-over point the better is the dynamic behaviour of the catalytic activity of the catalyst.

The just-described determination of the cross-over point uses a so-called static lambda-sweep. A dynamic lambda-sweep can also be used. In that case, the sweep curve for the lambda value is additionally modulated with a frequency of 1 Hz or 0,5 Hz. The amplitude may be ±1 A/F or ±0,5 A/F (air/fuel). This amplitude usually is larger than the amplitude of the sweep curve of ±0,02 λ, corresponding to an A/F-amplitude of ±0,3.

The dynamic cross-over points for the catalysts of the preceding examples were measured at a space velocity of 65000 h⁻¹ and at 450°C and 400°C exhaust gas temperature. At 450°C exhaust gas temperature the air/fuel-ratio was modulated with a frequency of 1 Hz and an amplitude of 1 A/F (1 Hz ± 1 air/fuel). At 400°C exhaust gas temperature the modulation amplitude was reduced to 0,5 A/F (1 Hz ± 0,5 air/fuel).

The measured results are listed in tables 4 and 5. Table 4 compares the catalysts which were aged during the first aging run while table 5 compares the catalysts aged during the second aging run:

**Table 4:**

| | T₅₀ [°C] | | | CO/NOₓ [%] | |
|---|---|---|---|---|---|
| catalyst | HC | CO | NOₓ | 1 Hz ± 1 A/F | 1 Hz ± 0,5 A/F |
| C1 | 360 | 363 | 354 | 84 | 88 |
| CC1 | 387 | 407 | 382 | 76 | 62 |

| | | | | | |
|---|---|---|---|---|---|
| CC: comparison catalyst; C: catalyst; T₅₀: light off temperature for 50% conversion | | | | | |

**Table 5:**

| | T₅₀ [°C] | | | CO/NOₓ [%] | |
|---|---|---|---|---|---|
| catalyst | HC | CO | NO. | 1 Hz ± 1 A/F | 1 Hz ± 0,5 A/F |
| C1 | 366 | 355 | 354 | 90 | 87 |
| CC2 | 373 | 374 | 359 | 85 | |
| CC3 | 389 | 391 | 379 | 72 | 79 |

### b) Model gas tests:

After aging the catalysts of example 1 and comparison example 3 for 16 hours at 985°C in a lean synthesis gas mixture containing 6 vol.-% O₂, 10 vol.-% H₂O, 20 ppm SO₂, balance N₂, the CO/NOₓ cross-over points were determined at a gas temperature of 400°C and a space velocity of 100000 h⁻¹. The cross-over points were determined for three different concentrations of SO₂ of the gas mixture (0, 5 and 20 ppm). The results are given in Table 6:

**Table 6:**

| | CO/NOₓ [%] | | |
|---|---|---|---|
| catalyst | 0 ppm SO₂ | 5 ppm SO₂ | 20 ppm SO₂ |
| C1 | 65 | 61 | 52 |
| CC3 | 42 | 35 | 30 |

### Example 2:

A further set of 4 different catalysts, C2, C3, C4 and C5, were prepared according to example 1. Differently from example 1, all catalysts were manufactured with a total noble metal loading of 2,12 g/l (60 g/ft³). The weight ratio of platinum to rhodium in the upper layer was varied to determine its influence on the catalytic properties of the catalysts. The noble metal distribution of these catalysts is listed in table 7.

**Table 7: noble metal distribution**

| | inner layer | outer layer | | outer layer | both layers |
|---|---|---|---|---|---|
| Catalyst | Pt [g/l] | Pt [g/l] | Rh [g/l] | Pt/Rh | Pt/Rh |
| C2 | 1,41 | 0,35 | 0,35 | 1:1 | 5:1 |
| C3 | 1,73 | 0,035 | 0,35 | 1:10 | 5:1 |
| C4 | 0,71 | 1,06 | 0,35 | 3:1 | 5:1 |
| C5 | 1,77 | 0,0 | 0,35 | 0:1 | 5:1 |

Before determining the CO/NOₓ cross-over points, all four catalysts were aged for 12 hours at an exhaust gas temperature in front of the catalysts of 1100°C in a synthetic gas mixture of 6 vol.-% oxygen, 10 vol.-% water vapour, 20 ppm sulfur dioxide, balance nitrogen.

The static cross-over points of these catalysts were determined at an exhaust gas temperature of 400°C and a space velocity of 100000 h⁻¹. During the test the lambda value of the exhaust gas was increased from 0,98 to 1,02 within 5 minutes. At 1,02 the lambda value was kept constant for 1 minute. Then the lambda value was lowered again to 0,98 in 5 minutes. After a dwell time of 1 minute, the described cycle was repeated again for 2 times. The CO/NOₓ cross-over values given in table 8 are mean values from the last two test cycles.

**Table 8: CO/NOₓ cross-over points**

| | CO/NOₓ [%] |
|---|---|
| catalyst | static |
| C2 | 90 |
| C3 | 55 |
| c4 | 94 |
| C5 | <30*) |

| | |
|---|---|
| *) : no cross-over point | |

For these measurements the model gas had the following composition:

| | | | |
|---|---|---|---|
| CO | 1,40 vol . -% | H₂ | 0, 4 7 vol.-% |
| NO | 0,1 vol.-% | CO₂ | 14,0 vol.-% |
| SO₂ | 20 ppm | H₂O | 10 vol . -% |
| C₃H₆ | 666 ppm | C₃H₈ | 333 ppm |
| O₂ | 0,93 - 1,77 vol.-% | N₂ | balance |

For performing the lambda-sweep the oxygen content of the model gas was varied between 0,93 and 1,77 vol.-%.

### Example 3:

Two further catalysts, C6 and C7, with a total noble metal loading of 1,41 g/l (40 g/ft³), were prepared according to example 1. For the preparation of catalyst C6, example 1 was exactly duplicated, while for the preparation of catalyst C7 the sequence of platinum and rhodium impregnation for the second support was inverted. First, rhodium was deposited onto the activated alumina support and only thereafter platinum.

Both catalysts were tested for their CO/NOₓ cross-over behaviour and their light off temperatures. The results are given in table 9.

**Table 9:**

| | T₅₀ [°C] | | | CO/NOₓ [%] | | |
|---|---|---|---|---|---|---|
| catalyst | HC | CO | NOₓ | 1 Hz ± 0,25 A/F | 1 Hz ± 0, 5 A/F | 1 Hz ± 1 A/F |
| C6 | 360 | 362 | 354 | 99 | 95 | 90 |
| C7 | 359 | 355 | 353 | 97 | 90 | 82 |

From the results of table 9 it can be seen that the dynamic behaviour of catalyst C6 is much better than of C7. Without wanting to be bound by any theory, this effect may be explained by a more intimate contact between platinum and rhodium if platinum is deposited first and then rhodium.

### Example 4:

Four further catalysts, C8, C9, C10 and C11, were prepared according to example 1 with the following alterations:

The total noble metal loading was set to 1,77 g/l (50 g/ft³). The platinum/rhodium ratio was changed to 3:2. In addition, different amounts of MnO₂ and NiO were added in particulate form to the coating dispersions for the inner layers of catalysts C9 to C11. These hydrogen sulfide suppressing components were added to the coating dispersions after the injection of the platinum compound.

For measuring the hydrogen sulfide emission of these catalysts, they were first loaded under lean conditions with sulfur (space velocity 65000 h⁻¹; temperature 550°C; lambda 1,01; approximate sulfur content of fuel: 200 ppm; approximate loading time >0,5 h). Thereafter, the lambda value was lowered to 0,88, and the emission of hydrogen sulfide was measured with an online mass spectrometer. The peak maximum of hydrogen sulfur emission is listed in table 10 for the catalysts C8 to C11.

**Table 10: suppression of H₂S-emission by MnO₂ and NiO**

| | both layers | total Pt + Rh | inner layer | H₂S maximum |
|---|---|---|---|---|
| Catalyst | Pt/Rh | [g/l] | H₂S suppressing component [g/l] | [ppm] |
| C8 | 3:1 | 1,77 | | 750 |
| C9 | 3:2 | 1,77 | 20 MnO₂ | 380 |
| C10 | 3:2 | 1,77 | 40 MnO₂ | 330 |
| C11 | 3:2 | 1,77 | 5 NiO | 100 |

### Example 5:

The catalysts according to the invention do not contain palladium. Nevertheless, they have proved to yield comparably low emissions of hydrocarbons, carbon monoxide and nitrogen oxides as do catalysts using palladium and rhodium.

A further object of the invention was to reduce the costs for the platinum group metals (PGM) of the novel platinum/rhodium catalysts as compared to conventional double layer palladium/rhodium catalysts given the PGM prices as of April 1999. Therefore, catalysts according to example 1 with different total noble metal loading and varying platinum/rhodium ratio were prepared and compared with respect to exhaust gas cleaning activity and PGM-costs.

The catalysts were tested on a EU-II certified vehicle as main underfloor catalysts with a ratio of catalyst volume/engine capacity of 0,67. All catalysts were measured following aging of 16 hours at 985°C with 10% by volume water in nitrogen. The tests were carried out with stoichiometric cold start according to the new European test cycle MVEG-EU III.

The relative emissions are given in Table 11 with the values for the palladium/rhodium comparison catalyst (14Pd/1Rh) set to 100:

**Table 11: Relative emissions versus PGM-costs**

| total PGM loading | PGM-ratio | relative Emissions | | | PGM costs |
|---|---|---|---|---|---|
| [g/l] | | HC | CO | NOₓ | |
| 3,53 | 14Pd/1Rh | 100 | 100 | 100 | 100 |
| 1, 41 | 5Pt/1Rh | 119 | 110 | 112 | 51 |
| 1,77 | 3Pt/2Rh | 92 | 91 | 83 | 75 |
| 3,32 | 45Pt/2Rh | 128 | 108 | 110 | 108 |
| 3,89 | 9Pt/2Rh | 80 | 75 | 56 | 142 |

As shown in table 11, the conversion of HC, CO and NOₓ is strongly influenced by the rhodium loading, and that for a given emission target, reducing the platinum content in favour of the rhodium content is beneficial. While, for example, a rhodium-enriched loading of 1,77 g/l (3Pt/2Rh) in the EU-II certified vehicle shows lower emissions for all three pollutant components compared with the Pd/Rh reference (3,53 g/l, 14Pd/1Rh), the 3,32 g/l (45Pt/2Rh) variant with high platinum content, falls behind the results of the 1,77 g/l loading (3Pt/2Rh), despite higher overall loading and distinctly higher precious metal costs.

## Claims

1. High performance catalyst which is free of palladium containing an inner and an outer layer on an inert carrier body comprising noble metals from the platinum group deposited on support materials,
wherein the inner layer comprised platinum deposited on a first support and on a first oxygen storage component and the outer layer comprises platinum and rhodium deposited on a second support and the outer layer further comprises a second oxygen storage component, and wherein
said first and second supports are the same or different and are compounds selected from the group consisting of silica, alumina, titania, zirconia, mixed oxides or mixtures therefrom and zirconia-rich zirconia/ceria mixed oxide wherein zirconia-rich means that the mixed oxide contains at least more than 50 % by weight of zirconia.

2. The catalyst according to claim 1, wherein
said first and second supports are activated alumina stabilised with 0,5 to 20 wt-% of lanthana.

3. The catalyst according to claim 2, wherein
said first support further comprises a zirconia component.

4. The catalyst according to claim 1, wherein
said first and second oxygen storage components are the same or different and comprise ceria-rich ceria/zirconia mixed oxide compounds wherein ceria-rich means a ceria concentration of from 60 to 90 weight-% relative to the total weight of the mixed oxide.

5. The catalyst according to claim 4, wherein
said ceria/zirconia mixed oxide compounds are stabilised with praseodymia, yttria, neodymia, lanthana or mixtures thereof.

6. The catalyst according to claim 5, wherein
said outer layer further comprises activated alumina.

7. The catalyst according to claim 1, wherein
said outer layer further comprises highly dispersed yttria, neodymia, lanthana or praseodymia.

8. The catalyst according to claim 1, wherein
platinum and rhodium are present on said second support in intimate contact with each other.

9. The catalyst according to one of the claims 1 to 8, wherein
said carrier body is in the form of a honeycomb with a plurality of substantially parallel passage ways extending therethrough, the passage ways being defined by walls onto which the inner layer is applied in amounts of from about 50 to 250 g/l and the outer layer is applied in amounts of from 10 to 150 g/l of the carrier body.

10. The catalyst according to claim 9, wherein
said first support is present in amounts of from 20 to 150 g/l, said first oxygen storage component is present in amounts of from 10 to 100 g/l and the zirconia component is present in amounts of from 5 to 60 g/l.

11. The catalyst according to claim 10, wherein
platinum is present in said inner layer in concentrations of from 0, 01 to 5 wt.-% relative to the total weight of said inner layer.

12. The catalyst according to claim 11, wherein
said second support is present in amounts of from 5 to 100 g/l, said second oxygen storage component is present in amounts of from 5 to 100 g/l and the activated alumina is present in amounts of from .5 to 60 g/l.

13. The catalyst according to claim 12, wherein
platinum and rhodium are present in said outer layer in concentrations Of from 0,5 to 20 wt.-% relative to the total weight of said outer layer and the platinum/rhodium mass ratio is selected from the range of from 5:1 to 1:3.

14. The catalyst according to claim 13, wherein
at least one of said inner and outer layers further comprises from about 1 to 40 g/l of a nickel, iron or manganese component.

15. High performance catalyst according to claim 1, wherein
the first support is active alumina, the first oxygen storage component is ceria-rich ceria/zirconia mixed oxide and the the second support is active alumina and the second oxygen storage component is ceria-rich ceria/zirconia mixed oxyde wherein ceria-rich means a ceria concentration of from 60 to 90 weight-% relative to the total weight of the mixed oxide and the catalyst is obtainable by
a) preparing solution of a praseodymium precursory adding ceria/zirconia mixed oxide and adjusting the pH-value of the dispersion to thereby precipitate the praseodymium precursor onto ceria/zirconia,
b) further adding active alumina to the dispersion of step a),
c) injecting a solution of a platinum precursor compound into the dispersion of step b) and precipitating it onto alumina and ceria/zirconia to obtain a first coating composition for the inner layer of the catalyst,
d) coating a monolithic carrier with said first coating composition and drying and calcining the coating to thereby obtain a carrier coated with said inner layer,
e) preparing a dispersion of active alumina and injecting a solution of a platinum compound into this dispersion,
f) thereafter injecting a solution of soluble rhodium precursor compound into the dispersion from step e) and adjusting the pH-value of the dispersion to thereby obtain an aqueous dispersion of active alumina catalysed with platinum and rhodium
g) adding active alumina and ceria-rich ceria/zirconia mixed oxide to the dispersion of step f),
h) using said second coating composition to apply said outer layer on top of said inner layer and
i) drying and calcining the coated monolithic carrier.

16. Catalyst according to claim 15, wherein
the active aluminas from step b) and e) are stabilised with 0,5 to 20 wt.-% of lanthana.

17. Catalyst according to claim 15, wherein
in step b) a further zirconia component is added

18. Catalyst according to claim 15, wherein
a solution of a praseodymium precursor compound is added to the dispersion of step e).

19. A method for manufacturing a catalyst according to any of claims 1 to 18, wherein
the method comprises the steps of
a) coating the walls of the passage ways of the carrier body with a coating composition containing particulate materials comprising said first support material and said first oxygen storage component,
b) drying and calcining said coating,
c) dipping the coated carrier body into a solution of a soluble precursor compound of platinum and calcining the coating, and
d) applying the outer layer on top of the inner layer.

20. A method for manufacturing a catalyst according to any of claims 1 to 18, wherein
the method comprises the steps or
a) catalysing particulate Materials comprising said first support material and said first oxygen storage component by impregnating them with a solution of a soluble precursor compound of platinium, drying and calcining the materials to thermally fix platinum thereon,
b) preparing an aqueous coating composition with the catalysed materials from step a) and coating the walls of the passage ways of the carrier body with this coating composition,
c) drying and calcining said coating, and
d) applying the outer layer on top of the inner layer.

21. A method for manufacturing a catalyst according to any of claims 1 to 18, wherein
the method comprises the steps of
a) preparing a dispersion from particulate materials comprising said first support material and said first oxygen storage component and injecting a solution of a soluble platinum precursor compound,
b) fixing the platinum compound on all particulate materials by adjusting the pH-value of the dispersion to thereby obtain a coating composition,
c) coating the walls of the passage ways of the carrier body with the aqueous coating composition from step a),
d) drying and calcining said coating, and
e) applying the outer layer on top of the inner layer.

22. A method for manufacturing catalyst according to anyone of the claims 19 to 21, wherein
the method further comprises the steps of
a) impregnating said second support with a solution of soluble precursor compound of platinum and of rhodium, drying and calcining the impregnated support to thereby obtain a catalysed support,
b) preparing an aqueous coating composition from said Catalysed support, said second oxygen storage component and additional active alumina, and
c) using said coating composition td apply said outer layer on top of said inner layer.

23. A method for manufacturing a catalyst according to anyone of the claims 19 to 21, wherein
the method further comprises the steps of
a) preparing a dispersion from said second support material and injecting a solution of a soluble platinum precursor compound,
b) thereafter injecting a solution of a soluble precursor compound of rhodium into the dispersion from step a) and adjusting the pH-value of the dispersion to thereby obtain a support catalysed with platinum and rhodium,
c) preparing a coating composition from the dispersion of step b) by adding said second oxygen storage compound and additional active alumina,
d) using said coating composition to apply said outer layer on top of said inner layer and
e) drying and calcining the coated monolithic carrier.

## Patentansprüche

1. Hochleistungskatalysator, der frei von Palladium ist und der eine innere und eine äußere Schicht auf einem inerten Tragkörper enthält, umfassend Edelmetalle aus der Platingruppe, die auf Trägermaterialien abgeschieden sind, wobei die innere Schicht Platin umfasst, das auf einem ersten Träger und auf einer ersten Sauerstoffspeicherkomponente abgeschieden ist, und die äußere Schicht Platin und Rhodium umfasst, die auf einem zweiten Träger abgeschieden sind, und die äußere Schicht ferner eine zweite Sauerstoffspeicherkomponente umfasst, und wobei der erste und zweite Träger gleich oder verschieden sind und Verbindungen sind, ausgewählt aus Siliciumdioxid, Aluminiumoxid, Titanoxid, Zirkoniumoxid, Mischoxiden oder Gemischen davon und Zirkoniumoxid-reichem Zirkoniumoxid/Ceroxid-Mischoxid, wobei Zirkoniumoxid-reich bedeutet, dass das Mischoxid mindestens mehr als 50 Gew.-% Zirkoniumoxid enthält.

2. Katalysator nach Anspruch 1, wobei der erste und zweite Träger aktiviertes Aluminiumoxid sind, das mit 0,5 bis 20 Gew.-% Lanthanoxid stabilisiert ist.

3. Katalysator nach Anspruch 2, wobei der erste Träger ferner eine Zirkoniumoxidkomponente umfasst.

4. Katalysator nach Anspruch 1, wobei die erste und zweite Sauerstoffspeicherkomponente gleich oder verschieden sind und Ceroxid-reiche Ceroxid/Zirkoniumoxid-Mischoxidverbindungen umfassen, wobei Ceroxid-reich eine Ceroxidkonzentration von 60 bis 90 Gew.-%, bezogen auf das Gesamtgewicht des Mischoxids, bedeutet.

5. Katalysator nach Anspruch 4, wobei die Ceroxid/Zirkoniumoxid-Mischoxidverbindungen mit Praseodymoxid, Yttriumoxid, Neodymoxid, Lanthanoxid oder Gemischen davon stabilisiert sind.

6. Katalysator nach Anspruch 5, wobei die äußere Schicht ferner aktiviertes Aluminiumoxid umfasst.

7. Katalysator nach Anspruch 1, wobei die äußere Schicht ferner hochdisperses Yttriumoxid, Neodymoxid, Lanthanoxid oder Praseodymoxid umfasst.

8. Katalysator nach Anspruch 1, wobei Platin und Rhodium auf dem zweiten Träger in innigem Kontakt miteinander vorhanden sind.

9. Katalysator nach einem der Ansprüche 1 bis 8, wobei der Tragkörper in der Form eines Wabenkörpers mit einer Mehrzahl im Wesentlichen paralleler Durchgänge, die sich **dadurch** erstrecken, ist, wobei die Durchgänge durch Wände definiert sind, auf die die innere Schicht in Mengen von etwa 50 bis 250 g/l und die äußere Schicht in Mengen von 10 bis 150 g/l des Tragkörpers aufgebracht ist.

10. Katalysator nach Anspruch 9, wobei der erste Träger in Mengen von 20 bis 150 g/l vorliegt, die erste Sauerstoffspeicherkomponente in Mengen von 10 bis 100 g/l vorliegt und die Zirkoniumoxidkomponente in Mengen von 5 bis 60 g/l vorliegt.

11. Katalysator nach Anspruch 10, wobei Platin in der inneren Schicht in Konzentrationen von 0,01 bis 5 Gew.-%, bezogen auf das Gesamtgewicht der inneren Schicht, vorliegt.

12. Katalysator nach. Anspruch 11, wobei der zweite Träger in Mengen von 5 bis 100 g/l vorliegt, die zweite Sauerstoffspeicherkomponente in Mengen von 5 bis 100 g/l vorliegt und das aktivierte Aluminiumoxid in Mengen von 5 bis 60 g/l vorliegt.

13. Katalysator nach Anspruch 12, wobei Platin und Rhodium in der äußeren Schicht in Konzentrationen von 0,5 bis 20 Gew.-%, bezogen auf das Gesamtgewicht der äußeren Schicht, vorliegen und das Platin/Rhodium-Massenverhältnis aus dem Bereich von 5:1 bis 1:3 ausgewählt ist.

14. Katalysator nach Anspruch 13, wobei mindestens eine der inneren und äußeren Schichten ferner etwa 1 bis 40 g/l einer Nickel-, Eisen- oder Mangankomponente umfasst.

15. Hochleistungskatalysator nach Anspruch 1, wobei der erste Träger aktiviertes Aluminiumoxid ist, die erste Sauerstoffspeicherkomponente Ceroxid-reiches Ceroxid/Zirkoniumoxid-Mischoxid ist und der zweite Träger aktives Aluminiumoxid ist und die zweite Sauerstoffspeicherkomponente Ceroxid-reiches Ceroxid/Zirkoniumoxid-Mischoxid ist, wobei Ceroxid-reich eine Ceroxidkonzentration von 60 bis 90 Gew.-%, bezogen auf das Gesamtgewicht des Mischoxids, bedeutet, und der Katalysator erhältlich ist durch
a) Herstellen einer Lösung einer Praseodymvorstufe, Zugeben von Ceroxid/Zirkoniumoxid-Mischoxid und Einstellen des pH-Werts der Dispersion, um **dadurch** die Praseodymvorstufe auf Ceroxid/Zirkoniumoxid zu fällen,
b) ferner Zugeben von aktivem Aluminiumoxid zu der Dispersion aus Schritt a),
c) Injizieren einer Lösung einer Platinvorstufen-Verbindung in die Dispersion aus Schritt b) und Fällen davon auf Aluminiumoxid und Ceroxid/Zirkoniumoxid, um eine erste Beschichtungszusammensetzung für die innere Schicht des Katalysators zu erhalten,
d) Beschichten eines monolithischen Tragkörpers mit der ersten Beschichtungszusammensetzung und Trocknen und Calcinieren der Beschichtung, um **dadurch** einen Tragkörper, der mit der inneren Schicht beschichtet ist, zu erhalten,
e) Herstellen einer Dispersion von aktivem Aluminiumoxid und Injizieren einer Lösung einer Platinverbindung in diese Dispersion,
f) danach Injizieren einer Lösung einer löslichen Rhodiumvorstufen-Verbindung in die Dispersion aus Schritt e) und Einstellen des pH-Werts der Dispersion, um **dadurch** eine wässrige Dispersion von aktivem Aluminiumoxid, das mit Platin und Rhodium katalysiert ist, zu erhalten,
g) Zugeben von aktivem Aluminiumoxid und Ceroxid-reichem Ceroxid/Zirkoniumoxid-Mischoxid zu der Dispersion aus Schritt f),
h) Verwenden der zweiten Beschichtungszusammensetzung, um die äußere Schicht auf der inneren Schicht aufzubringen und
i) Trocknen und Calcinieren des beschichteten monolithischen Tragkörpers.

16. Katalysator nach Anspruch 15, wobei die aktiven Aluminiumoxide aus Schritt b) und e) mit 0,5 bis 20 Gew.-% Lanthanoxid stabilisiert sind.

17. Katalysator nach Anspruch 15, wobei in Schritt b) eine weitere Zirkoniumoxidkomponente zugegeben wird.

18. Katalysator nach Anspruch 15, wobei eine Lösung einer Praseodymvorstufen-Verbindung zu der Dispersion aus Schritt e) zugegeben wird.

19. Verfahren zur Herstellung eines Katalysators nach einem der Ansprüche 1 bis 18, wobei das Verfahren die Schritte umfasst:
a) Beschichten der Wände der Durchgänge des Tragkörpers mit einer Beschichtungszusammensetzung, die teilchenförmige Materialien, umfassend das erste Trägermaterial und die erste Sauerstoffspeicherkomponente, enthält,
b) Trocknen und Calcinieren der Beschichtung,
c) Tauchen des beschichteten Tragkörpers in eine Lösung einer löslichen Vorstufenverbindung von Platin und Calcinieren der Beschichtung, und
d) Aufbringen der äußeren Schicht auf der inneren Schicht.

20. Verfahren zur Herstellung eines Katalysators nach einem der Ansprüche 1 bis 18, wobei das Verfahren die Schritte umfasst:
a) Katalysieren von teilchenförmigen Materialien, umfassend das erste Trägermaterial und die erste Sauerstoffspeicherkomponente, durch Imprägnieren davon mit einer Lösung einer löslichen Vorstufenverbindung von Platin, Trocknen und Calcinieren der Materialien, um Platin thermisch darauf zu fixieren,
b) Herstellen einer wässrigen Beschichtungszusammensetzung mit den katalysierten Materialien aus Schritt a) und Beschichten der Wände der Durchgänge des Tragkörpers mit dieser Beschichtungszusammensetzung,
c) Trocknen und Calcinieren der Beschichtung, und
d) Aufbringen der äußeren Schicht auf der inneren Schicht.

21. Verfahren zur Herstellung eines Katalysators nach einem der Ansprüche 1 bis 18, wobei das Verfahren die Schritte umfasst:
a) Herstellen einer Dispersion von teilchenförmigen Materialien, umfassend das erste Trägermaterial und die erste Sauerstoffspeicherkomponente, und Injizieren einer Lösung einer löslichen Platinvorstufen-Verbindung,
b) Fixieren der Platinverbindung auf allen teilchenförmigen Materialien durch Einstellen des pH-Werts der Dispersion, um **dadurch** eine Beschichtungszusammensetzung zu erhalten,
c) Beschichten der Wände der Durchgänge des Tragkörpers mit der wässrigen Beschichtungszusammensetzung aus Schritt a),
d) Trocknen und Calcinieren der Beschichtung, und
e) Aufbringen der äußeren Schicht auf der inneren Schicht.

22. Verfahren zur Herstellung eines Katalysators nach einem der Ansprüche 19 bis 21, wobei das Verfahren ferner die Schritte umfasst
a) Imprägnieren des zweiten Trägers mit einer Lösung einer löslichen Vorstufenverbindung von Platin und von Rhodium, Trocknen und Calcinieren des imprägnierten Trägers, um **dadurch** einen katalysierten Träger zu erhalten,
b) Herstellen einer wässrigen Beschichtungszusammensetzung aus dem katalysierten Träger, der zweiten Sauerstoffspeicherkomponente und zusätzlichem aktiven Aluminiumoxid, und
c) Verwenden der Beschichtungszusammensetzung, um die äußere Schicht auf der inneren Schicht aufzubringen.

23. Verfahren zur Herstellung eines Katalysators nach einem der Ansprüche 19 bis 21, wobei das Verfahren ferner die Schritte umfasst
a) Herstellen einer Dispersion aus dem zweiten Trägermaterial und Injizieren einer Lösung einer löslichen Platinvorstufen-Verbindung,
b) danach Injizieren einer Lösung einer löslichen Vorstufenverbindung von Rhodium in die Dispersion aus Schritt a) und Einstellen des pH-Werts der Dispersion, um **dadurch** einen Träger zu erhalten, der mit Platin und Rhodium katalysiert ist,
c) Herstellen einer Beschichtungszusammensetzung aus der Dispersion aus Schritt b) durch Zugeben der zweiten Sauerstoffspeicherkomponente und zusätzlichem aktiven Aluminiumoxid,
d) Verwenden der Beschichtungszusammensetzung, um die äußere Schicht auf der inneren Schicht aufzubringen und
e) Trocknen und Calcinieren des beschichteten monolithischen Tragkörpers.

## Revendications

1. Catalyseur haute performance sans palladium contenant une couche interne et une couche externe sur un corps de support inerte comprenant des métaux précieux issus du groupe du platine déposés sur les substances supports, dans lequel
- la couche interne comprend du platine déposé sur un premier support et sur un premier composant stockant l'oxygène, et la couche externe comprend du platine et du rhodium déposés sur un second support et la couche externe comprend en outre un second composant stockant l'oxygène, et
- les premier et second supports sont identiques ou différents et sont des composés choisis dans le groupe constitué par la silice, l'oxyde d'aluminium, l'oxyde de titane, l'oxyde de zirconium, les oxydes mixtes ou des mélanges de ceux-ci et un oxyde mixte oxyde de zirconium/oxyde de cérium riche en oxyde de zirconium, « riche en oxyde de zirconium » signifiant que l'oxyde mixte contient au moins plus de 50 % en poids d'oxyde de zirconium.

2. Catalyseur selon la revendication 1,
dans lequel les premier et second supports sont de l'oxyde d'aluminium activé stabilisé avec 0,5 à 20 % en poids d'oxyde de lanthane.

3. Catalyseur selon la revendication 2, dans lequel le premier support comprend en outre un composant oxyde de zirconium.

4. Catalyseur selon la revendication 1,
dans lequel les premier et second composants stockant l'oxygène sont identiques ou différents et comprennent des composés d'oxydes mixtes oxyde de cérium/oxyde de zirconium riches en oxyde de cérium dans lequel « riche en oxyde de cérium » signifiant une concentration en oxyde de cérium de 60 à 90 % en poids par rapport au poids total de l'oxyde mixte.

5. Catalyseur selon la revendication 4,
dans lequel les composés d'oxydes mixtes oxyde de cérium/oxyde de zirconium sont stabilisés avec de l'oxyde de praséodyme, de l'oxyde d'yttrium, de l'oxyde de néodyme, de l'oxyde de lanthane ou des mélanges de ceux-ci.

6. Catalyseur selon la revendication 5,
dans lequel la couche externe comprend en outre de l'oxyde d'aluminium activé.

7. Catalyseur selon la revendication 1,
dans lequel la couche externe comprend en outre de l'oxyde d'yttrium, de l'oxyde de néodyme, de l'oxyde de lanthane ou de l'oxyde de praséodyme hautement dispersé.

8. Catalyseur selon la revendication 1,
dans lequel le platine et le rhodium sont présents sur le second support en contact intime l'un avec l'autre.

9. Catalyseur selon l'une quelconque des revendications 1 à 8,
dans lequel le corps de support se présente sous la forme d'un nid d'abeilles avec une pluralité de passages sensiblement parallèles qui s'étendent à travers celui-ci, les passages étant définis par des parois sur lesquelles la couche interne est appliquée dans des quantités allant d'environ 50 à 250 g/l et la couche externe est appliquée dans des quantités allant de 10 à 150 g/l du corps de support.

10. Catalyseur selon la revendication 9,
dans lequel le premier support est présent dans des quantités allant de 20 à 150 g/l, le premier composant stockant l'oxygène est présent dans des quantités allant de 10 à 100 g/l et le composant en oxyde de zirconium est présent dans des quantités allant de 5 à 60 g/l.

11. Catalyseur selon la revendication 10,
dans lequel le platine est présent dans la couche interne dans des concentrations allant de 0,01 à 5 % en poids par rapport au poids total de la couche interne.

12. Catalyseur selon la revendication 11,
dans lequel le second support est présent dans des quantités allant de 5 à 100 g/l, le second composant stockant l'oxygène est présent dans des quantités allant de 5 à 100 g/l et l'oxyde d'aluminium activé est présent dans des quantités allant de 5 à 60 g/l.

13. Catalyseur selon la revendication 12,
dans lequel le platine et le rhodium sont présents dans la couche externe dans des concentrations allant de 0,5 à 20 % en poids par rapport au poids total de la couche externe et le rapport de masse platine/rhodium est choisi dans la plage de 5/1 1 à 1/3.

14. Catalyseur selon la revendication 13,
dans lequel au moins l'une des couches interne et externe comprend en outre environ 1 à 40 g/l d'un composant nickel, fer ou manganèse.

15. Catalyseur haute performance selon la revendication 1,
dans lequel le premier support est de l'oxyde d'aluminium actif et le premier composant stockant l'oxygène est l'oxyde mixte oxyde de cérium/oxyde de zirconium riche en oxyde de cérium, et le second support est de l'oxyde d'aluminium actif et le second composant stockant l'oxygène est l'oxyde mixte d'oxyde de cérium/oxyde de zirconium riche en oxyde de cérium, « riche en oxyde de cérium » signifiant une concentration en oxyde de cérium de 60 à 90 % en poids par rapport au poids total de l'oxyde mixte et le catalyseur peut être obtenu :
a) en préparant une solution d'un précurseur de praséodyme, en ajoutant de l'oxyde mixte d'oxyde de cérium/oxyde de zirconium et en réglant la valeur de pH de la dispersion pour précipiter de cette manière le précurseur de praséodyme sur le mélange d'oxyde de cérium/oxyde de zirconium,
b) en ajoutant en outre de l'oxyde d'aluminium actif à la dispersion de l'étape a),
c) en injectant une solution d'un composé précurseur de platine dans la dispersion de l'étape b) et en la précipitant sur l'oxyde d'aluminium et le mélange d'oxyde de cérium/oxyde de zirconium pour obtenir une première composition de revêtement pour la couche interne du catalyseur,
d) en revêtant un support monolithique de la première composition de revêtement et en séchant ainsi qu'en calcinant le revêtement pour obtenir de cette manière un support revêtu de la couche interne,
e) en préparant une dispersion d'oxyde d'aluminium actif et en injectant une solution d'un composé du platine dans cette dispersion,
f) en injectant par la suite une solution de composé précurseur de rhodium soluble dans la dispersion de l'étape e) et en réglant la valeur de pH de la dispersion pour obtenir de cette manière une dispersion aqueuse d'oxyde d'aluminium actif catalysé avec du platine et de rhodium,
g) en ajoutant de l'oxyde d'aluminium actif et de l'oxyde mixte oxyde de cérium/oxyde de zirconium riche en oxyde de cérium à la dispersion de l'étape f),
h) en utilisant la seconde composition de revêtement pour appliquer la couche externe sur la couche interne, et
i) en séchant et en calcinant le support monolithique revêtu.

16. Catalyseur selon la revendication 15, dans lequel les oxydes d'aluminium actifs des étapes b) et e) sont stabilisés avec 0,5 à 20 % en poids d'oxyde de lanthane.

17. Catalyseur selon la revendication 15,
dans lequel, à l'étape b), on ajoute un autre composant oxyde de zirconium.

18. Catalyseur selon la revendication 15,
dans lequel une solution d'un composé précurseur de praséodyme est ajoutée à la dispersion de l'étape e).

19. Procédé pour fabriquer un catalyseur selon l'une quelconque des revendications 1 à 18, comprenant les étapes consistant à :
a) revêtir les parois des passages du corps de support d'une composition de revêtement contenant des substances particulaires comprenant la première substance support et le premier composant stockant l'oxygène,
b) sécher et calciner le revêtement,
c) plonger le corps de support revêtu dans une solution de composé précurseur de platine soluble et à calciner le revêtement, et
d) appliquer la couche externe sur la couche interne.

20. Procédé pour fabriquer un catalyseur selon l'une quelconque des revendications 1 à 18, dans lequel le procédé comprenant les étapes consistant à :
a) catalyser des substances particulaires comprenant la première substance support et le premier composant stockant l'oxygène en les imprégnant d'une solution d'un composé précurseur de platine soluble, sécher et calciner les substances pour y fixer thermiquement le platine,
b) préparer une composition de revêtement aqueuse avec les substances catalysées de l'étape a) et revêtir les parois des passages du corps de support de cette composition de revêtement,
c) sécher et calciner le revêtement, et
d) appliquer la couche externe sur la couche interne.

21. Procédé pour fabriquer un catalyseur selon l'une quelconque des revendications 1 à 18, comprenant les étapes consistant à :
a) préparer une dispersion à partir de substances particulaires comprenant la première substance support et le premier composant stockant l'oxygène et à injecter une solution d'un composé précurseur de platine soluble,
b) fixer le composé du platine sur toutes les substances particulaires en réglant la valeur de pH de la dispersion pour obtenir de cette manière une composition de revêtement,
c) revêtir les parois des passages du corps de support de la composition de revêtement aqueuse de l'étape a),
d) sécher et calciner le revêtement, et
e) appliquer la couche externe sur la couche interne.

22. Procédé pour fabriquer un catalyseur selon l'une quelconque des revendications 19 à 21, comprenant en outre les étapes consistant à :
a) imprégner le second support d'une solution de composé précurseur soluble de platine de rhodium, sécher et calciner le support imprégné pour obtenir de cette manière un support catalysé,
b) préparer une composition de revêtement aqueuse à partir du support catalysé, du second composant stockant l'oxygène et d'oxyde d'aluminium actif additionnel, et à
c) utiliser la composition de revêtement pour appliquer la couche externe sur la couche interne.

23. Procédé pour fabriquer un catalyseur selon l'une quelconque des revendications 19 à 21, comprenant en outre les étapes consistant à :
a) préparer une dispersion à partir de la seconde substance support et injecter une solution d'un composé précurseur de platine soluble,
b) injecter par la suite une solution d'un composé précurseur de rhodium soluble dans la dispersion de l'étape a) et régler la valeur de pH de la dispersion pour obtenir de cette manière un support catalysé avec du platine et du rhodium,
c) préparer une composition de revêtement à partir de la dispersion de l'étape b) en ajoutant le second composé stockant l'oxygène et de l'oxyde d'aluminium actif additionnel,
d) utiliser la composition de revêtement pour appliquer la couche externe sur la couche interne, et
e) sécher et calciner le support monolithique revêtu.
